(19) Europäisches Patentamt
European Patent Office
Office européen des brevets

(11) **EP 2 474 852 B1**

(12) **EUROPÄISCHE PATENTSCHRIFT**

(45) Veröffentlichungstag und Bekanntmachung des Hinweises auf die Patenterteilung:
**11.01.2017 Patentblatt 2017/02**

(51) Int Cl.:
*G02B 21/00* (2006.01)    *G01N 21/64* (2006.01)

(21) Anmeldenummer: **12150790.9**

(22) Anmeldetag: **11.01.2012**

(54) **Verfahren und Einrichtung zur rastermikroskopischen Abbildung eines Objektes**

Method and device for imaging an object using a scanning microscope

Procédé et dispositif de représentation d'un objet microscopique en champ proche d'un objet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2011 DE 102011000090**

(43) Veröffentlichungstag der Anmeldung:
**11.07.2012 Patentblatt 2012/28**

(73) Patentinhaber: **Leica Microsystems CMS GmbH 35578 Wetzlar (DE)**

(72) Erfinder:
• **Birk, Holger**
  **74909 Meckesheim (DE)**
• **Widzgowski, Bernd**
  **69221 Dossenheim (DE)**
• **Nissle, Holger**
  **69115 Heidelberg (DE)**

(74) Vertreter: **Schaumburg und Partner Patentanwälte mbB Postfach 86 07 48 81634 München (DE)**

(56) Entgegenhaltungen:
EP-A1- 1 767 979    DE-A1-102008 049 877
US-A1- 2008 290 293    US-A1- 2010 251 438

**Beschreibung**

Die Erfindung betrifft ein Verfahren und eine Einrichtung zur rastermikroskopischen Abbildung eines Objektes nach dem Oberbegriff des Anspruchs 1 bzw. des Anspruchs 9.

In der Rastermikroskopie, insbesondere der konfokalen Mikroskopie, wird ein abzubildendes Objekt nicht in seiner Gesamtheit beleuchtet, sondern mittels eines üblicherweise von einer Laserlichtquelle abgegebenen Abtaststrahl in einer Rasterbewegung Punkt für Punkt abgetastet. Dabei ist für die Abtastung eines einzelnen Objektpunktes ein Abtastzeitintervall vorgesehen, während dessen der Abtaststrahl den jeweiligen Objektpunkt beleuchtet. Die von diesem Objektpunkt abgegebene Strahlung, beispielsweise durch den Abtaststrahl ausgelöstes Fluoreszenzlicht, wird dann von einem Detektor erfasst und in ein Bildpunktsignal umgesetzt. Aus den Bildpunktsignalen, die für die einzelnen Objektpunkte erzeugt werden, wird schließlich ein Rasterbildsignal zusammengesetzt, auf dessen Grundlage ein das Objekt in seiner Gesamtheit abbildendes Rasterbild dargestellt werden kann.

Die einzelnen Bildpunktsignale geben die Helligkeit oder Intensität der Strahlung wieder, die von einem einzelnen Objektpunkt während des zugehörigen Abtastzeitintervalls abgegeben wird. Um die Strahlungsintensität möglichst präzise zu erfassen, ist es denkbar, während des jeweiligen Abtastzeitintervalls die Intensität der von dem gerade abgetasteten Objektpunkt abgegebenen Strahlung mehrmals zu erfassen, um dann aus den erfassten Intensitäten einen Intensitätsmittelwert zu bestimmen.

Das resultierende Rasterbildsignal, welches das abgebildete Objekt in seiner Gesamtheit wiedergibt, setzt sich in diesem Fall aus einzelnen Mittelwert-Bildpunktsignalen zusammen, die jeweils die über das jeweilige Abtastzeitintervall gemittelte Intensität oder Helligkeit repräsentieren.

Die in vorstehend beschriebener Weise gewonnenen Rasterbilder enthalten ausschließlich die Objekthelligkeit als Bildinformation. Um nun beispielsweise dynamische Prozesse wie Diffusion analysieren zu können, wäre es wünschenswert, wenn die erzeugten Rasterbilder über die Helligkeit hinausgehende Bildinformation liefern könnten.

Eine solche zusätzliche Bildinformation kann beispielsweise in der Fluoreszenzkorrelationsspektroskopie gewonnen werden. Jedoch wird bei diesem Verfahren die Bildinformation in der Regel nur für einen einzigen Bildpunkt erfasst, d.h. ein auswertbares Rasterbild kann hiermit nicht erzeugt werden. Dies ist mit der sogenannten Rastbildkorrelationsspektroskopie, kurz RICS, möglich, bei der mit einer Autokorrelation der Bildinformation gearbeitet wird. Jedoch muss bei dieser Methode die Rasterbewegung in einer Geschwindigkeit erfolgen, die im Bereich der Geschwindigkeit liegt, mit der die zu analysierenden dynamischen Prozesse wie beispielsweise die Diffusion ablaufen. Außerdem ist bei diesem Verfahren die Auswertung besonders kompliziert, wenn die Rasterbewegung nicht linear ist. Im Bereich der Korrelationsspektroskopie ist ferner auf ein Analyseverfahren hinzuweisen, das in der Literatur als "Number and Brightness" oder kurz als "N&B" bezeichnet wird. Bei diesem Verfahren werden mehrere Bilder benötigt, um anhand der Fluktuation an einer bestimmten Bildposition Rückschlüsse auf dynamische Prozesse zu gewinnen.

Ein Verfahren nach dem Oberbegriff des Anspruchs 1 ist aus der EP 1 767 971 A1 bekannt.

Aufgabe der Erfindung ist es, ein Verfahren und eine Einrichtung zur rastermikroskopischen Abbildung eines Objektes eingangs erläuterter Art so weiterzubilden, dass eine Analyse dynamischer Prozesse anhand von Rasterbildern einfach und schnell möglich ist.

Die Erfindung löst diese Aufgabe für das Verfahren durch die Merkmale des Anspruchs 1 und für die Einrichtung durch die Merkmale des Anspruchs 9.

Das erfindungsgemäße Verfahren sieht vor, dass aus den in dem jeweils abgetasteten Objektpunkt erfassten Intensitäten neben einem Intensitätsmittelwert, der als Mittelwert-Bildpunktsignal genutzt wird, zusätzlich ein Intensitätsvarianzwert als Varianz-Bildpunktsignal bestimmt wird und die so für die einzelnen Objektpunkte erzeugten Varianz-Bildpunktsignale zu einem Varianz-Rasterbildsignal zusammengesetzt werden. Unter "Objektpunkt" ist hierbei selbstverständlich nicht ein Punkt im streng mathematischen Sinne, sondern ein mit dem fokussierten Abtaststrahl beleuchteter, räumlich eng begrenzter Teilbereich des Objektes zu verstehen.

Die Erfindung sieht demnach vor, für jeden einzelnen Objektpunkt, der mit dem Abtaststrahl beaufschlagt wird, die Intensität der von diesem Objektpunkt abgegebene Strahlung innerhalb des zugehörigen Abtastzeitintervalls mehrmals zu erfassen und dann aus diesen mehreren Intensitätswerten sowohl einen Intensitätsmittelwert als auch einen Intensitätsvarianzwert zu bestimmen. Für jeden Objektpunkt wird so neben der mittleren Helligkeit, die durch den Intensitätsmittelwert gegeben ist, zusätzlich eine weitere Bildinformation in Form des Intensitätsvarianzwertes gewonnen. Sowohl der Intensitätsmittelwert als auch der Intensitätsvarianzwert werden jeweils als Bildpunktsignal genutzt. Die für sämtliche Objektpunkte erzeugten Bildpunktsignale werden dann zu einem Mittelwert-Rasterbildsignal bzw. einem Varianz-Rasterbildsignal zusammengesetzt. Auf diese Weise werden zwei Rasterbilder erzeugt, nämlich eines, dessen Bildpunkte oder Pixel jeweils den Intensitätsmittelwert und damit die mittlere Helligkeit darstellen, und ein anderes, dessen Bildpunkte oder Pixel jeweils eine weitere Bildinformation in Form der Intensitätsvarianz bereitstellen.

Diese weitere Bildinformation kann zur Analyse dynamischer Prozesse genutzt werden. Beispielsweise kann sie in der Fluoreszenzmikroskopie zur Analyse der Diffusion von Fluoreszenzfarbstoffen eingesetzt werden. Auch ist es anhand dieser zusätzlichen Bildinformation möglich, je nach Anwendung Aussagen über Viskositätsschwankungen, Membrandurchlässigkeiten, Partikelgrößen, etc. zu gewinnen.

Das erfindungsgemäße Verfahren ermöglicht es also, während der Bestrahlung eines einzelnen Objektpunktes zwei verschiedene Bildinformationen, nämlich den Mittelwert und die Varianz, zu erfassen und damit zwei diesem Objektpunkt zugeordnete Bildpunkte zu erzeugen. Durch das Zusammensetzen dieser Bildpunkte werden so im Ergebnis bei gleicher Abtaststrahlbelastung des Objektes nicht nur ein, sondern zwei Rasterbilder erzeugt, von denen eines die mittlere Helligkeit und das andere die Helligkeitsvarianz wiedergibt. Dadurch ist das Verfahren effizienter als die eingangs genannten, aus dem Stand der Technik bekannten Verfahren.

Vorzugsweise wird auf Grundlage des jeweiligen Mittelwert-Bildpunktsignals und des zugehörigen Varianz-Bildpunktsignals ein Auswerte-Bildpunktsignal erzeugt. Die so erzeugten Auswerte-Bildpunktsignale werden dann zu einem Auswerte-Rasterbildsignal zusammengesetzt. In dieser vorteilhaften Weiterbildung wird also neben dem Mittelwert-Rasterbild und dem Varianz-Rasterbild zusätzlich ein Auswerte-Rasterbild als drittes Bild erzeugt. Die drei Rasterbilder können dann auf einer Anzeigevorrichtung in unterschiedlicher Weise, z.B. nebeneinander, einander überlagert, gleichzeitig oder in einer vorbestimmten Bildfolge, zur Darstellung gebracht werden, um die Analyse dynamischer Prozesse zu vereinfachen.

Vorzugsweise wird die Intensität der innerhalb jedes Abtastzeitintervalls abgegebenen Strahlung zur Erfassung von n Intensitätswerten in aufeinander folgenden Subintervallen n-mal digitalisiert, wobei n eine ganze Zahl größer als 1 ist und die Subintervalle jeweils gleich dem 1/n-fachen des Abtastzeitintervalls sind. Beträgt beispielsweise das Abtastzeitintervall, häufig auch als Pixeldauer bezeichnet, $10\mu s$ und die Messfrequenz, mit der innerhalb jedes Abtastzeitintervalls die Intensitätswerte erfasst werden, 40Mhz, so erhält man pro Bildpunkt oder Pixel n=400 Messwerte. Auf Grundlage dieser 400 Messwerte werden dann der Intensitätsmittelwert und der Intensitätsvarianzwert bestimmt.

In einer vorteilhaften Ausgestaltung werden die n Intensitätswerte erfasst, indem ein der abgegebenen Strahlung entsprechendes analoges Signal mittels eines Analog-Digital-Wandlers innerhalb des jeweiligen Abtastzeitintervalls n-mal jeweils mit einer vorbestimmten Umsetzdauer, die gleich dem Subintervall ist, in ein den jeweiligen Intensitätswert darstellendes digitales Signal umgesetzt wird. Die Umsetzdauer des Analog-Digital-Wandlers ist in diesem Fall also so kurz bemessen, dass der Wandler innerhalb des Abtastzeitintervalls n-mal in Betrieb genommen werden kann, um das analoge Signal n-mal zu digitalisieren und so die n Intensitätswerte zu erfassen.

In einer alternativen Ausführungsform kann anstelle eines Analog-Digital-Wandlers ein Photonenzähler verwendet werden, dessen Zähldauer so kurz bemessen ist, dass innerhalb des Abtastzeitintervalls n Zählzyklen durchgeführt werden können.

Vorzugsweise wird der jeweilige Intensitätsmittelwert $\bar{x}$ nach folgender Formel (1) bestimmt:

$$\bar{x} = \frac{1}{n} \sum_{i=1}^{n} x_i \qquad (1)$$

Der jeweilige Intensitätsvarianzwert V wird nach folgender Formel (2) bestimmt:

$$V = \frac{1}{n-1} \sum_{i=1}^{n} (x_i - \bar{x})^2 \qquad (2)$$

worin die Größe $\sum_{i=1}^{n} (x_i - \bar{x})^2$ vorzugsweise nach Formel (3)

$$\sum_{i=1}^{n} (x_i - \bar{x})^2 = \sum_{i=1}^{n} x_i^2 - n\bar{x}^2 \qquad (3)$$

oder nach folgender Formel (3')

$$\sum_{i=1}^{n} (x_i - \bar{x})^2 = \sum_{i=1}^{n} x_i^2 - \frac{1}{n}\left(\sum_{i=1}^{n} x_i\right)^2 \qquad (3')$$

bestimmt wird,
wobei

$x_i$ die innerhalb des jeweiligen Abtastzeitintervalls erfassten Intensitäten bezeichnen, und

$n$ eine ganze Zahl größer als 1 bezeichnet, welche die Anzahl der innerhalb des jeweiligen Abtastzeitintervalls erfassten Intensitäten $x_i$ angibt.

Durch die Signalverarbeitung gemäß Formel (3) bzw. (3') lassen sich sowohl die Summe als auch die Summe der Quadrate der Intensitäten $x_i$ in einem Durchlauf berechnen. Damit ist es möglich, die Rechenoperationen direkt während der Bildaufnahme, d.h. in Echtzeit während der Beleuchtung des jeweiligen Objektpunktes mit dem Abtaststrahl durchführen.

Vorzugsweise wird der Quotient aus dem Intensitätsvarianzmittelwert V und dem Intensitätsmittelwert $\bar{x}$ als Auswerte-Bildpunktsignal bestimmt. Diese Weiterbildung kann beispielsweise dazu genutzt werden, in dem Objekt Bereiche erhöhter Diffusion zu erfassen. Geht man nämlich davon aus, dass ein statisches, d.h. an einem Objektträger fixiertes Objekt Photonen gemäß der Poisson-Statistik emittiert, so ist die Varianz proportional zur Anzahl der emittierten Photonen. Dies bedeutet, dass das Mittelwert-Rasterbild und das Varianz-Rasterbild bis auf statistische Fluktuationen dieselbe Bildinformation liefern. Variiert nun die Photonenquelle zusätzlich beispielsweise auf Grund der Diffusion von Fluoreszenzfarbstoffen oder dgl., so erhöht sich die Varianz entsprechend gegenüber dem zugehörigen Intensitätsmittelwert, d.h. gegenüber der Bildhelligkeit. Anhand des für jeden einzelnen Objektpunkt gebildeten Quotienten aus dem Intensitätsvarianzwert V und dem Intensitätsmittelwert x lassen sich so Bereiche erhöhter Diffusion in dem Objekt erkennen. Das durch diesen Quotienten gebildete Auswerte-Bildpunktsignal kann dann zur Erzeugung eines Auswerte-Rasterbildes verwendet werden, in dem diese Bereiche deutlich hervortreten.

In einer weiteren vorteilhaften Ausgestaltung ist vorgesehen, die Zahl $N_{ph}$ an Photonen, die von dem jeweiligen Objektpunkt innerhalb des zugehörigen Abtastzeitintervalls abgegeben werden, in Abhängigkeit des Intensitätsmittelwertes $\bar{x}$ und des Intensitätsvarianzwertes V nach folgender Formel (4) als Auswerte-Bildpunktsignal zu bestimmen:

$$N_{ph} = \frac{\bar{x}^2}{V} \qquad (4)$$

Dieser Weiterbildung liegt die Erkenntnis zu Grunde, dass bei Anwendbarkeit der Poisson-Statistik die Zahl $N_{ph}$ an emittierten Photonen durch die Formel (4) gegeben ist. Die Bestimmung der Photonenzahl $N_{ph}$ kann dabei unabhängig von irgendwelchen Verstärkungsfaktoren und Kalibrationen erfolgen. Sie setzt lediglich voraus, dass das Poissonrauschen die dominante Quelle für Fluktuationen des Messsignals, d.h. der erfassten Intensitätswerte ist (sofern Rauscheffekte vernachlässigbar sind). So kann die (an sich unbekannte) Gesamtverstärkung in einem Faktor $\vartheta$ zusammengefasst werden. In diesem Fall gilt für die Photonenzahl $N_{ph}$ folgende Formel (5):

$$\frac{N_{ph}}{\vartheta} = \bar{x} \qquad (5),$$

Aus der Poisson-Statistik ergibt sich:

$$\frac{N_{ph}}{\vartheta^2} = V \qquad (6).$$

Aus den Formeln (5) und (6) ergibt sich schließlich:

$$\frac{\bar{x}^2}{V} = \frac{\left(\frac{N_{ph}}{\vartheta}\right)^2}{\frac{N_{ph}}{\vartheta^2}} = N_{ph} \qquad (7).$$

Vorstehende Überlegungen machen deutlich, dass das Auswerte-Bildpunktsignal nach Formel (4) tatsächlich geeignet ist, die Photonenzahl $N_{ph}$ zu bestimmen. Damit lässt sich unter Berücksichtigung des Abtastzeitintervalls der absolut detektierte Photonenfluss (z.B. in Photonen pro Sekunde) unabhängig von Verstärkungsfaktoren und Kalibrationen angeben.

Die erfindungsgemäße Einrichtung nach Anspruch 9 ist zur Durchführung des Verfahrens nach Anspruch 1 ausgebildet.

In einer besonders vorteilhaften Weiterbildung dieser Einrichtung umfasst die Recheneinheit die den jeweiligen Intensitätsmittelwert und den jeweiligen Intensitätsvarianzwert ermittelt, einen frei programmierbaren Logikbaustein, insbesondere ein frei programmierbares Verknüpfungsfeld, kurz FPGA, einen digitalen Signalprozessor, kurz DSP, oder eine anwendungsspezifische integrierte Schaltung, kurz ASIC. Ein solcher Logikbaustein ist im Stande, die erfindungsgemäß zu bestimmenden Größen, nämlich den Intensitätsmittelwert und den Intensitätsvarianzwert direkt während der Bildaufnahme, d.h. in Echtzeit zu berechnen. Damit lässt sich die Datenmenge, die an die Auswerteeinheit, in der die Mittelwert-Bildpunktsignale zu den Mittelwert-Rasterbildsignal und die Varianz-Bildpunktsignale zu dem Varianz-Rasterbildsignal zusammengesetzt und diese Bilder dann ausgewertet werden, stark reduzieren. So müssen lediglich der Intensitätsmittelwert und der Intensitätsvarianzwert für jeden einzelnen Objektpunkt an die Auswerteeinheit übertragen werden.

Im Folgenden wird die Erfindung anhand eines Ausführungsbeispiels unter Bezugnahme auf die Figuren erläutert. Darin zeigen:

Figur 1    den Aufbau eines erfindungsgemäßen konfokalen Rastermikroskops; und

Figur 2    eine in dem Rastermikroskop nach Figur 1 vorgesehene Recheneinheit und die mit der Recheneinheit zusammenwirkenden Komponenten.

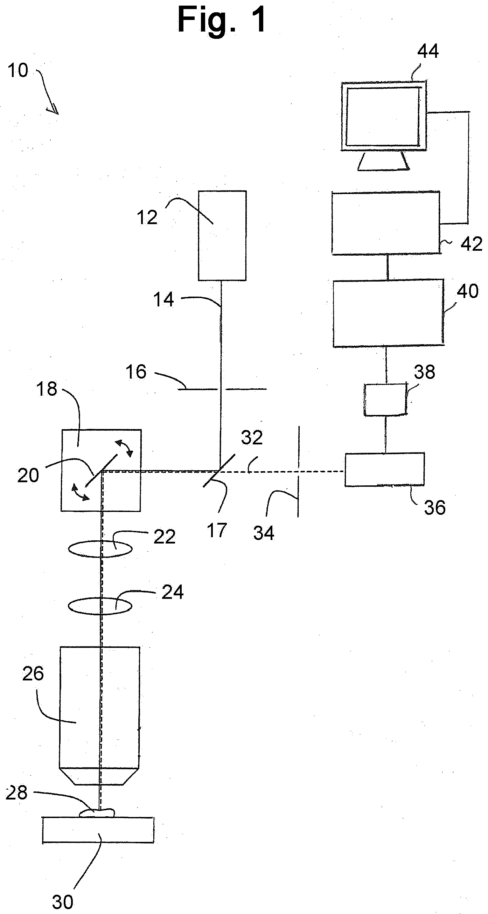

Figur 1 zeigt schematisch ein erfindungsgemäßes konfokales Rastermikroskop 10. Das Rastermikroskop 10 enthält einer Laserlichtquelle 12, die einen Abtaststrahl 14 auf eine erste Lochblende 16 aussendet. Der durch die erste Lochblende 16 tretende Abtaststrahl 14 wird an einem feststehenden Strahlteiler 17 auf eine Abtasteinheit 18 reflektiert. Die Abtasteinheit 18 weist einen kardanisch aufgehängten Abtastspiegel 20 auf, an dem der Abtaststrahl 14 in Richtung einer aus zwei Linsen 22 und 24 gebildeten Abtastoptik reflektiert wird. Nach Durchtritt durch die Abtastoptik gelangt der Abtaststrahl 14 in ein Objektiv 26, das den Abtaststrahl 14 auf ein Objekt 28 fokussiert, das auf einem Objekttisch 30 aufliegt. In Figur 1 ist der von der Laserlichtquelle 12 ausgesendete und schließlich auf das Objekt 28 fokussierte Abtaststrahl mit einer durchgezogenen Linie angedeutet.

Das abzubildende Objekt 28 ist mit Fluoreszenzfarbstoffen versehen, die durch den Abtaststrahl 14 angeregt werden, Fluoreszenzstrahlung auszusenden. Die Fluoreszenzstrahlung ist in Figur 1 durch eine gestrichelte Linie angedeutet und mit 32 bezeichnet. Die Wellenlänge der Fluoreszenzstrahlung 32 ist verschieden von der Wellenlänge des Abtaststrahls 14. Die Fluoreszenzstrahlung 32 tritt entgegen der Ausbreitungsrichtung des Abtaststrahls 14 durch das Objektiv 26 und die aus den beiden Linsen 22 und 24 gebildete Abtastoptik. Dann fällt sie auf den Abtastspiegel 20, an dem sie in Richtung des Strahlteilers 17 reflektiert wird. Der Strahlteiler 17 ist so ausgebildet, dass er für die Wellenlänge für die Fluoreszenzstrahlung 32 durchlässig ist. Die Fluoreszenzstrahlung 32 tritt so durch den Strahlteiler 17 und anschließend durch eine zweite Lochblende 34. Ein Detektor 36 empfängt die durch die zweite Lochblende 34 tretende Fluoreszenzstrahlung und setzt diese in ein entsprechendes analoges Spannungssignal um.

Der Abtaststrahl 14 wird durch die erste Lochblende 16 in an sich bekannter Weise auf das Objekt 28 fokussiert. Dies bedeutet, dass der Abtaststrahl 14 nicht das gesamte Objekt 28 beleuchtet, sondern zu jedem Zeitpunkt einen beugungsbegrenzt kleinen Teil davon, der vorliegend vereinfacht als Objektpunkt bezeichnet wird. Dieser Objektpunkt wird durch die zweite Lochblende 34 auf den Detektor 36 in Form eines entsprechenden Bildpunktes abgebildet.

Indem der kardanisch aufgehängte Abtastspiegel 20 mittels eines in Figur 1 nicht gezeigten Antriebs (wie durch die beiden Doppelpfeile angedeutet) bewegt wird, rastert der Abtaststrahl 14 das Objekt 28 Objektpunkt für Objektpunkt ab. Hierfür ist ein Abtastzeitintervall vorgesehen, während dessen der Abtaststrahl 14 den jeweiligen Objektpunkt beleuchtet.

Die Erfindung sieht nun vor, während eines solchen Abtastzeitintervalls, in dem der jeweilige Objektpunkt mit dem Abtaststrahl 14 beleuchtet wird, die Intensität der von diesem Objektpunkt abgegebenen Fluoreszenzstrahlung mehrmals zu erfassen, um mehrere Intensitätswerte zu erhalten, die in später erläuterter Weise verarbeitet werden. In dem vorliegenden Ausführungsbeispiel werden in jedem Abtastzeitintervall mehrere Intensitätswerte dadurch erfasst, dass das von dem Detektor 36 erzeugte analoge Spannungssignal einem Analog-Digital-Wandler 38 zugeführt wird. Der Analog-Digital-Wandler 38 wandelt das ihm zugeführte analoge Spannungssignal mit einer Umsetzdauer in ein digitales Signal um, die so bemessen ist, dass innerhalb des jeweiligen Abtastzeitintervalls mehrere Analog-Digital-Umsetzungen vollzogen werden.

Nimmt man rein beispielsweise an, dass der Analog-Digital-Wandler 38 mit einer Frequenz von 40MHz arbeitet und das Abtastzeitintervall $10\mu s$ beträgt, so werden während des Abtastzeitintervalls 400 Analog-Digital-Umsetzungen durchgeführt. Dies bedeutet, dass für einen einzelnen Objektpunkt 400 digitale Intensitätswerte bestimmt werden.

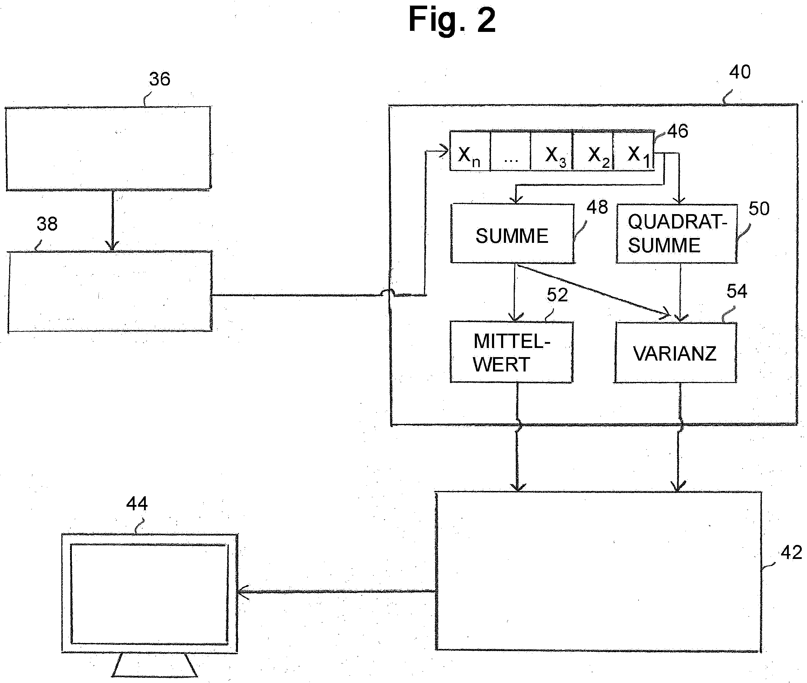

Die von dem Analog-Digital-Wandler erzeugten digitalen Intensitätswerte werden an eine Recheneinheit 40 ausgegeben. Die Recheneinheit 40 ist in dem vorliegenden Ausführungsbeispiel ein frei programmierbarer Logikbaustein, beispielsweise ein FPGA, DSP oder ASIC. Die Recheneinheit 40 bestimmt aus den ihr von dem Analog-Digital-Wandler 38 zugeführten digitalen Intensitätswerten mindestens zwei dem jeweils abgetasteten Objektpunkt zugeordnete Bildpunktsignale, nämlich ein Mittelwert-Bildpunktsignal und ein Varianz-Bildpunktsignal. Die Bestimmung dieser beiden Bildpunktsignale wird weiter unten unter Bezugnahme auf Figur 2 näher erläutert.

Die für die Bestimmung der beiden Bildpunktsignale erforderlichen Rechenoperationen führt die Recheneinheit 40 in Echtzeit durch, d.h. die beiden Bildpunktsignale stehen unmittelbar nach Ablauf des jeweiligen Abtastzeitintervalls zur Verfügung. Die Recheneinheit 40 gibt die Bildpunktsignale an eine Auswerteeinheit 42, z.B. einen Personalcomputer, aus. Nachdem sämtliche Objektpunkte mit dem Abtaststrahl 14 abgetastet sind, stehen also eine Folge von Mittelwert-Bildpunktsignalen sowie eine Folge von Varianz-Bildpunktsignalen (sowie ggf. Folgen von weiteren Bildpunktsignalen) zur Verfügung, die zu einem Mittelwert-Rasterbildsignal bzw. einem Varianz-Rasterbildsignal zusammengesetzt werden. Das Zusammensetzen zu diesen Rasterbildsignalen erfolgt in dem vorliegenden Ausführungsbeispiel in der Auswerteeinheit 42. Bei entsprechender Programmierung der Recheneinheit 40 kann dies jedoch auch in letzterer erfolgen. Die Auswerteeinheit 42 gibt dann die Rasterbildsignale an einen Monitor 44 aus, auf dem entsprechende Rasterbilder des abgebildeten Objektes 28 angezeigt werden.

Anhand der Figur 2 wird im Folgenden die Bestimmung der Bildpunktsignale durch die Recheneinheit 40 genauer erläutert. Hierzu ist in Figur 2 ein beispielhafter Aufbau der Recheneinheit 40 schematisch dargestellt.

Wie schon oben erläutert, empfängt die Recheneinheit 40 die digitalen Intensitätswerte, die der Analog-Digital-Wandler 38 durch Umsetzung des von dem Detektor 36 erzeugten analogen Spannungssignals innerhalb eines Abtastzeitintervalls erzeugt, während dessen ein jeweiliger Objektpunkt mit dem Abtaststrahl 14 beleuchtet wird. Die Recheneinheit 40 enthält ein Verzögerungsglied 46, dem von dem Analog-Digital-Wandler 38 die digitalen Intensitätswerte zugeführt werden. Legt man wiederum das oben genannte Beispiel zu Grunde, in dem das Abtastzeitintervall eine Länge von $10\mu s$ und der Analog-Digital-Wandler 38 eine Umsetzfrequenz von 40MHz aufweist, so empfängt das Verzögerungsglied 46 n=400 Intensitätswerte, die in Figur 1 mit $x_1$, $x_2$, $x_3$,...,$x_n$ bezeichnet sind. Das Verzögerungsglied 46 nimmt eine Zwischenspeicherung der Intensitätswerte $x_1$, $x_2$, $x_3$, ..., $x_n$ vor und arbeitet dabei nach dem sogenannten "First In-First Out"-Prinzip, bei dem der zuerst gespeicherte Intensitätswert auch zuerst wieder dem Speicher entnommen wird.

Das Verzögerungsglied 46 führt die Intensitätswerte $x_1$, $x_2$, $x_3$, ..., $x_n$ einem ersten Funktionsblock 48 und einem zweiten Funktionsblock 50 zu. Der erste Funktionsblock 48 bildet die Summe der Intensitätswerte $x_1$, $x_2$, $x_3$, ..., $x_n$, während der zweite Funktionsblock 50 die Quadratsumme der Intensitätswerte $x_1$, $x_2$, $x_3$, ..., $x_n$ ermittelt. Anschließend gibt der erste Funktionsblock 48 die ermittelte Summe an einen dritten Funktionsblock 52 sowie einen vierten Funktionsblock 54 aus. Der zweite Funktionsblock 50 führt die ermittelte Quadratsumme dem vierten Funktionsblock 54 zu.

Der dritte Funktionsblock 52 ermittelt einen Intensitätsmittelwert x nach der weiter oben angegebenen Formel (1). Dagegen ermittelt der vierte Funktionsblock 54 einen Intensitätsvarianzwert V unter Anwendung der weiter oben genannten Formeln (2), (3) bzw. (3'). Der dritte Funktionsblock 52 gibt den Intensitätsmittelwert x als Mittelwert-Bildpunktsignal an die Auswerteeinheit 42 aus. Entsprechend gibt der vierte Funktionsblock 54 den Intensitätsvarianzwert V als Varianz-Bildpunktsignal an die Auswerteeinheit 42 aus.

Die vorstehend beschriebenen Rechenoperationen der Recheneinheit 40 werden für jeden abgetasteten Objektpunkt durchgeführt. Nachdem sämtliche Objektpunkte mit dem Abtaststrahl 14 abgetastet worden sind, stehen also eine Folge von Mittelwert-Bildpunktsignalen sowie eine Folge von Varianz-Bildpunktsignalen zur Verfügung, die in der Auswerteeinheit 42 zu einem Mittelwert-Rasterbildsignal bzw. einen Varianz-Rasterbildsignal zusammengesetzt werden. Auf Grundlage dieser Rasterbildsignale werden dann auf dem Monitor 44 ein Mittelwert-Rasterbild bzw. ein Varianz-Rasterbild angezeigt. Dabei sind beliebige Arten der Bilddarstellung denkbar. So können die beiden vorstehend genannten Rasterbilder nebeneinander, einander überlagert oder in einer vorbestimmten zeitlichen Folge nacheinander auf dem Monitor 44 angezeigt werden. Auch ist es denkbar, die zusätzliche Bildinformation, die in dem Varianz-Rasterbild enthalten ist, dem Mittelwert-Rasterbild in Falschfarben überlagert oder in einer dreidimensionalen Darstellung auf dem Monitor 44 wiederzugeben.

Wie weiter oben diskutiert, kann die in dem Varianz-Rasterbild enthaltene zusätzliche Bildinformation insbesondere zur Analyse dynamischer Prozesse genutzt werden. Beispielsweise ist es denkbar, anhand dieser Bildinformation Aussagen über Viskositätsschwankungen, Membrandurchlässigkeiten, Partikelgrößen, Diffusionsparameter etc. abzuleiten.

Anhand des in der Recheneinheit 40 bestimmten Intensitätsvarianzwertes V können auch weitere Größen bestimmt werden. Beispielhaft ist hier der Quotient aus dem Intensitätsvarianzwert V und dem Intensitätsmittelwert $\overline{x}$ zu nennen. Auch kann die Photonenzahl $N_{ph}$ gemäß der weiter oben angegebenen Formel (7) ermittelt werden. Anhand dieser Größen wird dann für jeden Objektpunkt ein entsprechendes Auswerte-Bildpunktsignal erzeugt, um anschließend die Auswerte-Bildpunktsignale sämtlicher Objektpunkte zu einem Auswerte-Rasterbildsignal zusammenzusetzen und das entsprechende Rasterbild auf dem Monitor 44 anzuzeigen.

Die vorstehend beschriebene Ausführungsform ist lediglich beispielhaft zu verstehen. So kann das in den Figuren 1 und 2 gezeigte Ausführungsbeispiel selbstverständlich unter Beibehaltung der erfindungsgemäßen Lösung modifiziert werden. Beispielsweise ist es möglich, den Detektor 36 und den Analog-Digital-Wandler 38 durch einen Photonenzähler zu ersetzen, der die Intensitätswerte dadurch erfasst, dass er in mehreren Zählzyklen innerhalb des jeweiligen Abtastzeitintervalls die Zahl an Photonen erfasst, die der von dem jeweiligen Objektpunkt abgegebenen Strahlung entsprechen. Ferner versteht sich von selbst, dass anhand des Intensitätsmittelwertes und des Intensitätsvarianzwertes auch andere Größen als die vorstehend beschriebenen Auswertegrößen bestimmt werden können.

Bezugszeichenliste

| | |
|---|---|
| 10 | konfokales Rastermikroskop |
| 12 | Laserlichtquelle |
| 14 | Abtaststrahl |
| 16 | erste Lochblende |
| 17 | Strahlteiler |
| 18 | Abtasteinheit |
| 20 | Abtastspiegel |
| 22, 24 | Linsen |
| 26 | Objektiv |
| 28 | Objekt |
| 30 | Objekttisch |
| 32 | Fluoreszenzstrahlung |
| 34 | zweite Lochblende |
| 36 | Detektor |
| 38 | Analog-Digital-Wandler |
| 40 | Recheneinheit |
| 42 | Auswerteeinheit |
| 44 | Monitor |
| 46 | Verzögerungsglied |
| 48 | erster Funktionsblock |
| 50 | zweiter Funktionsblock |
| 52 | dritter Funktionsblock |
| 54 | vierter Funktionsblock |

**Patentansprüche**

1.  Verfahren zur rastermikroskopischen Abbildung eines Objektes (28), mit folgenden Schritten:

    Abtasten einer Vielzahl von Objektpunkten mittels eines Abtaststrahls (14) in aufeinander folgenden Abtastzeitintervallen,
    mehrmaliges Erfassen der Intensität der von dem jeweils abgetasteten Objektpunkt abgegebenen Strahlung innerhalb des zugehörigen Abtastzeitintervalls,
    Bestimmen eines Intensitätsmittelwertes aus den in dem jeweils abgetasteten Objektpunkt erfassten Intensitäten als Mittelwert-Bildpunktsignal, und
    Zusammensetzen der Mittelwert-Bildpunktsignale zu einem Mittelwert-Rasterbildsignal,
    **dadurch gekennzeichnet, dass**
    aus den in dem jeweils abgetasteten Objektpunkt erfassten Intensitäten zusätzlich ein Intensitätsvarianzwert als Varianz-Bildpunktsignal bestimmt wird, und
    die Varianz-Bildpunktsignale zu einem Varianz-Rasterbildsignal zusammengesetzt werden.

2.  Verfahren nach Anspruch 1, **dadurch gekennzeichnet, dass** auf Grundlage des jeweiligen Mittelwert-Bildpunktsignals und des zugehörigen Varianz-Bildpunktsignals ein Auswerte-Bildpunktsignal erzeugt wird, und
    die erzeugten Auswerte-Bildpunktsignale zu einem Auswerte-Rasterbildsignal zusammengesetzt werden.

3.  Verfahren nach Anspruch 1 oder 2, **dadurch gekennzeichnet, dass** die Intensität der innerhalb jedes Abtastzeitintervalls abgegebenen Strahlung zur Erfassung von n Intensitätswerten in aufeinander folgenden Subintervallen n-mal digitalisiert wird, wobei n eine ganze Zahl größer als 1 ist und die Subintervalle jeweils gleich dem 1/n-fachen des Abtastzeitintervalls sind.

4. Verfahren nach Anspruch 3, **dadurch gekennzeichnet, dass** die n Intensitätswerte erfasst werden, indem ein der abgegebenen Strahlung entsprechendes analoges Signal mittels eines Analog-Digital-Wandlers innerhalb des jeweiligen Abtastzeitintervalls n-mal jeweils mit einer vorbestimmten Umsetzdauer, die gleich dem Subintervall ist, in ein den jeweiligen Intensitätswert darstellenden digitales Signal umgesetzt wird.

5. Verfahren nach Anspruch 3, **dadurch gekennzeichnet, dass** die n Intensitätswerte erfasst werden, indem die Zahl an Photonen, die der abgegebenen Strahlung entsprechen, mittels eines Photonenzählers innerhalb des jeweiligen Abtastzeitintervalls n-mal jeweils mit einer vorbestimmten Zähldauer, die gleich dem Subintervall ist, bestimmt wird.

6. Verfahren nach einem der vorhergehenden Ansprüche, **dadurch gekennzeichnet, dass**
der jeweilige Intensitätsmittelwert $\bar{x}$ nach folgender Formel (1) bestimmt wird:

$$\bar{x} = \frac{1}{n} \sum_{i=1}^{n} x_i \qquad (1)$$

und der jeweilige Intensitätsvarianzwert V nach folgender Formel (2) bestimmt wird:

$$V = \frac{1}{n-1} \sum_{i=1}^{n} (x_i - \bar{x})^2 \qquad (2),$$

worin die Größe $\sum_{i=1}^{n} (x_i - \bar{x})^2$ vorzugsweise nach folgender Formel (3)

$$\sum_{i=1}^{n} (x_i - \bar{x})^2 = \sum_{i=1}^{n} x_i^2 - n\bar{x}^2 \qquad (3)$$

oder nach folgender Formel (3')

$$\sum_{i=1}^{n} (x_i - \bar{x})^2 = \sum_{i=1}^{n} x_i^2 - \frac{1}{n} \left( \sum_{i=1}^{n} x_i \right)^2 \qquad (3')$$

bestimmt wird, wobei

$x_i$ die innerhalb des jeweiligen Abtastzeitintervalls erfassten Intensitäten bezeichnen, und
n eine ganze Zahl größer als 1 bezeichnet, welche die Anzahl der innerhalb des jeweiligen Abtastzeitintervalls erfassten Intensitäten $x_i$ angibt.

7. Verfahren nach Anspruch 6, **dadurch gekennzeichnet, dass** der Quotient aus dem Intensitätsvarianzwert V und dem Intensitätsmittelwertes $\bar{x}$ als Auswerte-Bildpunktsignal bestimmt wird.

8. Verfahren nach Anspruch 6 oder 7, **dadurch gekennzeichnet, dass** die Zahl $N_{ph}$ an Photonen, die von dem jeweiligen Objektpunkt innerhalb des zugehörigen Abtastzeitintervalls detektiert werden, in Abhängigkeit des Intensitätsmittelwertes $\bar{x}$ und des Intensitätsvarianzwertes V nach folgender Formel (4) als Auswerte-Bildpunktsignal bestimmt wird:

$$N_{ph} = \frac{\bar{x}^2}{V} \qquad (4)$$

9. Einrichtung zur rastermikroskopischen Abbildung eines Objektes, mit:

einer Abtasteinheit (12, 18), die ausgebildet ist, eine Vielzahl von Objektpunkten mittels eines Abtaststrahls (14) in aufeinander folgenden vorbestimmten Abtastzeitintervallen abzutasten,
einer Erfassungseinheit (36, 38), die ausgebildet ist, die Intensität der von dem jeweils abgetasteten Objektpunkt abgegebenen Strahlung innerhalb des zugehörigen Abtastzeitintervalls mehrmals zu erfassen,
einer Recheneinheit (40), die ausgebildet ist, einen Intensitätsmittelwert aus den in dem jeweils abgetasteten Objektpunkt erfassten Intensitäten als Mittelwert-Bildpunktsignal zu bestimmen, und
einer Auswerteeinheit (42), die ausgebildet ist, die Mittelwert-Bildpunktsignale zu einem Mittelwert-Rasterbildsignal zusammenzusetzen,
**dadurch gekennzeichnet, dass**
die Recheneinheit (40) ferner ausgebildet ist, aus den in dem jeweils abgetasteten Objektpunkt erfassten Intensitäten zusätzlich einen Intensitätsvarianzwert als Varianz-Bildpunktsignal zu bestimmen, und
die Auswerteeinheit (42) ferner ausgebildet ist, die Varianz-Bildpunktsignale zu einem Varianz-Rasterbildsignal zusammenzusetzen.

10. Einrichtung nach Anspruch 9, **dadurch gekennzeichnet, dass** die Auswerteeinheit (42) ferner ausgebildet ist, auf Grundlage des Mittelwert-Rasterbildsignals und des Varianz-Rasterbildsignals ein Auswerte-Rasterbildsignal zu erzeugen und die erzeugten Auswerte-Bildpunktsignale zu einem Auswerte-Rasterbildsignal zusammenzusetzen.

11. Einrichtung nach Anspruch 8 oder 9, **dadurch gekennzeichnet, dass** die Erfassungseinheit (36, 38) ein Digitalisiermittel (38) umfasst, das ausgebildet ist, die Intensität der innerhalb jedes Abtastzeitintervall detektierten Strahlung zur Erfassung von n Intensitätswerten in aufeinander folgenden Subintervallen n-mal zu digitalisieren, wobei n eine ganze Zahl größer als 1 ist und die Subintervalle jeweils gleich dem 1/n-fachen des Abtastzeitintervalls sind.

12. Einrichtung nach Anspruch 11, **dadurch gekennzeichnet, dass** das Digitalisiermittel einen Analog-Digital-Umsetzer (38) umfasst, der ausgebildet ist, die n Intensitätswerte zu erfassen, indem er ein der detektierten Strahlung entsprechendes analoges Signal innerhalb des jeweiligen Abtastzeitintervalls n-mal jeweils mit einer vorbestimmten Umsetzdauer, die gleich dem Subintervall ist, in ein den jeweiligen Intensitätswert darstellenden digitales Signal umsetzt.

13. Einrichtung nach Anspruch 11, **dadurch gekennzeichnet, dass** das Digitalisiermittel einen Photonenzähler umfasst, der ausgebildet ist, die n Intensitätswerte zu erfassen, indem er die Zahl an Photonen, die der detektierten Strahlung entsprechen, innerhalb des jeweiligen Abtastzeitintervalls n-mal jeweils mit einer vorbestimmten Zähldauer bestimmt, die gleich dem Subintervall ist.

14. Einrichtung nach einem der Ansprüche 9 bis 13, **dadurch gekennzeichnet, dass** die Recheneinheit (40) einen frei programmierbaren Logikbaustein, insbesondere einen FPGA, einen DSP oder einen ASIC, umfasst.

15. Konfokales Rastermikroskop (10) mit einer Einrichtung nach einem der Ansprüche 9 bis 14.

**Claims**

1. Method for imaging an object (28) using a scanning microscope, comprising the following steps:

   scanning a multiplicity of object points by means of a scanning beam (14) in successive scanning time intervals,
   detecting the intensity of the radiation emitted by the respectively scanned object point a number of times within the associated scanning time interval,
   determining an intensity mean from the intensities detected at the respectively scanned object point as mean pixel signal, and
   combining the mean pixel signals to form a mean scanning image signal,
   **characterized in that**
   an intensity variance is additionally determined as variance pixel signal from the intensities detected at the respectively scanned object point,
   and
   the variance pixel signals are combined to form a variance scanning image signal.

2. Method according to Claim 1, **characterized in that** an evaluation pixel signal is generated on the basis of the respective mean pixel signal and the associated variance pixel signal, and
   the generated evaluation pixel signals are combined to form an evaluation scanning image signal.

3. Method according to Claim 1 or 2, **characterized in that** the intensity of the radiation emitted within each scanning time interval for detecting n intensity values in successive sub-intervals is digitized n-times, where n is an integer greater than 1 and the sub-intervals equal 1/n-times the scanning time interval.

4. Method according to Claim 3, **characterized in that** the n intensity values are detected by virtue of an analogue signal corresponding to the emitted radiation being converted n-times within the respective scanning time interval into a digital signal representing the respective intensity value, each time with a predetermined conversion duration which equals the sub-interval, by means of an analogue-to-digital converter.

5. Method according to Claim 3, **characterized in that** the n intensity values are detected by virtue of the number of photons, which correspond to the emitted radiation, being determined n-times within the respective scanning time interval, each time with a predetermined count duration which equals the sub-interval, by means of a photon counter.

6. Method according to one of the preceding claims, **characterized in that**
the respective intensity mean $\bar{x}$ is determined according to the following equation (1):

$$\bar{x} = \frac{1}{n} \sum_{i=1}^{n} x_i \qquad (1)$$

and the respective intensity variance V is determined according to the following equation (2):

$$V = \frac{1}{n-1} \sum_{i=1}^{n} (x_i - \bar{x})^2 \qquad (2)$$

where the expression $\sum_{i=1}^{n} (x_i - \bar{x})^2$ is preferably determined according to the following equation (3):

$$\sum_{i=1}^{n} (x_i - \bar{x})^2 = \sum_{i=1}^{n} x_i^2 - n\bar{x}^2 \qquad (3)$$

or according to the following equation (3'):

$$\sum_{i=1}^{n} (x_i - \bar{x})^2 = \sum_{i=1}^{n} x_i^2 - \frac{1}{n} \left( \sum_{i=1}^{n} x_i \right)^2 \qquad (3'),$$

where

$x_i$ denote the intensities detected within the respective scanning time interval and
n denotes an integer greater than 1, which specifies the number of intensities $x_i$ detected within the respective scanning time interval.

7. Method according to Claim 6, **characterized in that** the quotient of the intensity variance V and the intensity mean $\bar{x}$ is determined as evaluation pixel signal.

8. Method according to Claim 6 or 7, **characterized in that** the number $N_{ph}$ of photons which are detected from the respective object point within the associated scanning time interval is determined as evaluation pixel signal in a manner dependent on the intensity mean $\bar{x}$ and the intensity variance V according to the following equation (4):

$$N_{ph} = \frac{\bar{x}^2}{V} \qquad (4).$$

9. Device for imaging an object using a scanning microscope, comprising:

a scanning unit (12, 18) embodied to scan a multiplicity of object points by means of a scanning beam (14) in successive predetermined scanning time intervals,
a detection unit (36, 38) embodied to detect the intensity of the radiation emitted by the respectively scanned object point within the associated scanning time interval a number of times,
a computing unit (40) embodied to determine an intensity mean from the intensities detected in the respectively scanned object point as mean pixel signal, and
an evaluation unit (42) embodied to combine the mean pixel signals to form a mean scanning image signal, **characterized in that**
the computing unit (40) is furthermore embodied to additionally determine an intensity variance as variance pixel signal from the intensities detected in the respectively scanned object point,
and
the evaluation unit (42) is furthermore embodied to combine the variance pixel signals to form a variance scanning image signal.

10. Device according to Claim 9, **characterized in that** the evaluation unit (42) is furthermore embodied to generate an evaluation scanning image signal on the basis of the mean scanning image signal and the variance scanning image signal and combine the generated evaluation pixel signals to form an evaluation scanning image signal.

11. Device according to Claim 8 or 9, **characterized in that** the detection unit (36, 38) comprises a digitization means (38) embodied to digitize the intensity of the radiation detected within each scanning time interval n-times for the purposes of detecting n intensity values in successive sub-intervals, were n is an integer greater than 1 and the sub-intervals each equal 1/n-times the scanning time interval.

12. Device according to Claim 11, **characterized in that** the digitization means comprises an analogue-to-digital converter (38) embodied to detect the n intensity values by virtue of it converting an analogue signal corresponding to the detected radiation n-times within the respective scanning time interval into a digital signal representing the respective intensity value, each time with a predetermined conversion duration which equals the sub-interval.

13. Device according to Claim 11, **characterized in that** the digitization means comprises a photon counter embodied to detect the n intensity values by virtue of it determining the number of photons, which correspond to the detected radiation, n-times within the respective scanning time interval, each time with a predetermined count duration which equals the sub-interval.

14. Device according to one of Claims 9 to 13, **characterized in that** the computing unit (40) comprises a freely programmable logic component, in particular an FPGA, a DSP or an ASIC.

15. Confocal scanning microscope (10) comprising a device according to one of Claims 9 to 14.

**Revendications**

1. Procédé de représentation microscopique à balayage d'un objet (28), comprenant les étapes suivantes :

balayage d'une pluralité de points d'objet au moyen d'un rayon de balayage (14) dans des intervalles de temps de balayage successifs,
détection à plusieurs reprises de l'intensité du rayonnement délivré par le point d'objet respectivement balayé à l'intérieur de l'intervalle de temps de balayage associé,
détermination d'une valeur moyenne d'intensité à partir des intensités détectées dans le point d'objet balayé respectif en tant que signal de pixel à valeur moyenne,
et
assemblage des signaux de pixel à valeur moyenne en un signal d'image matricielle à valeur moyenne **caractérisé en ce que**
une valeur de variance d'intensité est en plus déterminée en tant que signal de pixel à variance à partir des intensités détectées dans le point d'objet respectivement balayé, et
les signaux de pixel à variance sont assemblés en un signal d'image matricielle à variance.

**2.** Procédé selon la revendication 1, **caractérisé en ce qu'**un signal de pixel d'interprétation est généré en se basant sur le signal de pixel à valeur moyenne respectif et le signal de pixel à variance associé, et les signaux de pixel d'interprétation générés sont assemblés en un signal d'image matricielle d'interprétation.

**3.** Procédé selon la revendication 1 ou 2, **caractérisé en ce que** l'intensité du rayonnement délivré à l'intérieur de chaque intervalle de temps de balayage est numérisée n fois en vue de détecter n valeurs d'intensité dans des sous-intervalles successifs, n étant un nombre entier supérieur à 1 et les sous-intervalles étant respectivement égaux à 1/n$^{\text{ème}}$ de l'intervalle de temps de balayage.

**4.** Procédé selon la revendication 3, **caractérisé en ce que** les n valeurs d'intensité sont détectées **en ce qu'**un signal analogique correspondant au rayonnement délivré est converti n fois au moyen d'un convertisseur analogique/numérique à l'intérieur de l'intervalle de temps de balayage, respectivement avec une durée de conversion prédéfinie qui est égale au sous-intervalle, en un signal numérique qui représente la valeur d'intensité respective.

**5.** Procédé selon la revendication 3, **caractérisé en ce que** les n valeurs d'intensité sont détectées **en ce que** le nombre de photons qui correspondent au rayonnement délivré est déterminé n fois au moyen d'un compteur de photons à l'intérieur de l'intervalle de temps de balayage, respectivement avec une durée de comptage prédéfinie qui est égale au sous-intervalle.

**6.** Procédé selon l'une des revendications précédentes, **caractérisé en ce que** la valeur moyenne d'intensité $\bar{x}$ respective est déterminée d'après la formule (2) suivante :

$$\bar{x} = \frac{1}{n}\sum_{i=1}^{n} x_i \qquad (1),$$

et la valeur de variance d'intensité V respective est déterminée d'après la formule (1) suivante :

$$V = \frac{1}{n-1}\sum_{i=1}^{n}(x_i - \bar{x})^2 \qquad (2),$$

la grandeur $\sum_{i=1}^{n}(x_i - \bar{x})^2$ étant de préférence déterminée d'après la formule (3) suivante

$$\sum_{i=1}^{n}(x_i - \bar{x})^2 = \sum_{i=1}^{n} x_i^2 - n\bar{x}^2 \qquad (3)$$

ou d'après la formule (3') suivante

$$\sum_{i=1}^{n}(x_i - \bar{x})^2 = \sum_{i=1}^{n} x_i^2 - \frac{1}{n}\left(\sum_{i=1}^{n} x_i\right)^2 (3'),$$

où

xi désigne les intensités détectées à l'intérieur de l'intervalle de temps de balayage respectif, et
n désigne un nombre entier supérieur à 1 qui indique le nombre d'intensités $x_i$ détectées à l'intérieur de l'intervalle de temps de balayage respectif.

**7.** Procédé selon la revendication 6, **caractérisé en ce que** le quotient de la valeur de variance d'intensité V et de la valeur moyenne d'intensité $\bar{x}$ est déterminé en tant que signal de pixel d'interprétation.

**8.** Procédé selon la revendication 6 ou 7, **caractérisé en ce que** le nombre N$_{\text{ph}}$ de photons qui sont détectés par le point d'objet respectif à l'intérieur de l'intervalle de temps de balayage associé est déterminé en fonction de la valeur moyenne d'intensité x et de la valeur de variance d'intensité V selon la formule (4) suivante en tant que signal de pixel d'interprétation :

$$N_{\text{ph}} = \frac{\bar{x}^2}{V} \qquad (4).$$

**9.** Dispositif de représentation microscopique à balayage d'un objet comprenant :

une unité de balayage (12, 18) qui est configurée pour balayer une pluralité de points d'objet au moyen d'un rayon de balayage (14) dans des intervalles de temps de balayage prédéfinis successifs,

une unité de détection (36, 38) qui est configurée pour détecter à plusieurs reprises l'intensité du rayonnement délivré par le point d'objet respectivement balayé à l'intérieur de l'intervalle de temps de balayage associé,

une unité de calcul (40) qui est configurée pour déterminer une valeur moyenne d'intensité à partir des intensités détectées dans le point d'objet balayé respectif en tant que signal de pixel à valeur moyenne, et

une unité d'interprétation (42) qui est configurée pour assembler les signaux de pixel à valeur moyenne en un signal d'image matricielle à valeur moyenne **caractérisé en ce que**

l'unité de calcul (40) est en outre configurée pour déterminer en plus, à partir des intensités détectées dans le point d'objet respectivement balayé, une valeur de variance d'intensité en tant que signal de pixel à variance et l'unité d'interprétation (42) est en outre configurée pour assembler les signaux de pixel à variance en un signal d'image matricielle à variance.

**10.** Dispositif selon la revendication 9, **caractérisé en ce que** l'unité d'interprétation (42) est en outre configurée pour générer un signal d'image matricielle d'interprétation en se basant sur le signal d'image matricielle à valeur moyenne et le signal d'image matricielle à variance et pour assembler les signaux de pixel d'interprétation générés en un signal d'image matricielle d'interprétation.

**11.** Dispositif selon la revendication 8 ou 9, **caractérisé en ce que** l'unité de détection (36, 38) comprend un moyen de numérisation (38) qui est configuré pour numériser n fois l'intensité du rayonnement délivré à l'intérieur de chaque intervalle de temps de balayage en vue de détecter n valeurs d'intensité dans des sous-intervalles successifs, n étant un nombre entier supérieur à 1 et les sous-intervalles étant respectivement égaux à $1/n^{ème}$ de l'intervalle de temps de balayage.

**12.** Dispositif selon la revendication 11, **caractérisé en ce que** le moyen de numérisation comprend un convertisseur analogique/numérique (38) qui est configuré pour détecter les n valeurs d'intensité **en ce qu'**il convertit n fois un signal analogique correspondant au rayonnement détecté à l'intérieur de l'intervalle de temps de balayage respectif, respectivement avec une durée de conversion prédéfinie qui est égale au sous-intervalle, en un signal numérique qui représente la valeur d'intensité respective.

**13.** Dispositif selon la revendication 11, **caractérisé en ce que** le moyen de numérisation comprend un compteur de photons qui est configuré pour détecter les n valeurs d'intensité **en ce que** le nombre de photons qui correspondent au rayonnement détecté est déterminé n fois à l'intérieur de l'intervalle de temps de balayage respectif, respectivement avec une durée de comptage prédéfinie qui est égale au sous-intervalle.

**14.** Dispositif selon l'une des revendications 9 à 13, **caractérisé en ce que** l'unité de calcul (40) comprend un composant logique programmable librement, notamment un FGPA, un DSP ou un ASIC.

**15.** Microscope à balayage confocal (10) équipé d'un dispositif selon l'une des revendications 9 à 14.

# Fig. 1

# Fig. 2

EP 2 474 852 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1767971 A1